# EUROPEAN PATENT SPECIFICATION

(11) **EP 1 481 880 B1**
(45) Date of publication and mention of the grant of the patent: **25.03.2009**
(21) Application number: 04102344.1
(22) Date of filing: 27.05.2004
(51) Int. Cl.: B62D 25/18, B62D 25/16

(54) **Fastening support for mudguard**
Befestigungsvorrichtung für Kotflügel
Dispositif de fixation d'un garde-boue

(30) Priority: 28.05.2003 FI 20030807
(43) Date of publication of application: 01.12.2004
(73) Proprietor: Motoseal Components Oy, 26100 Rauma (FI)
(72) Inventor: Elo, Seppo, 26820, Rauma (FI); Mattila, Eero, 26660, Rauma (FI)
(74) Representative: Huhtanen, Ossi Jaakko

(56) References cited:
- DE-C- 547 943
- FR-A- 2 813 847
- US-A- 5 074 573

## Description

### BACKGROUND OF THE INVENTION

The invention relates to a fastening support for a mudguard to enable the mudguard to be fastened to a hub of a turning wheel such that as the wheel turns at an angle smaller than a given turning angle, the mudguard turns along with the wheel accordingly, whereby by means of a stop element the mudguard is prevented from turning along with the wheel at an angle larger than the given turning angle, the fastening support including a flexible element equipped with spring members and arranged to return the mudguard to turn along with the wheel when the turning angle of the wheel is returned to an angle smaller than the aforementioned given turning angle.

DE 3 607 000 discloses a mudguard arranged in connection with a turning wheel. The mudguard is fastened in connection with a hub of a wheel such that at a small turning angle the mudguard turns along with the wheel. Supporting structures of the mudguard are provided with a stop member to stop the mudguard from turning at turning angles larger than a given turning angle. A fastening element of the mudguard includes a compression spring which compresses at these large turning angles, thus enabling the mudguard not to turn. Furthermore, when the wheel is returned to its original straight position, the compression spring returns the mudguard in a direction parallel with the wheel. A similar fastening support to be arranged in connection with a front wheel of an agricultural tractor is disclosed in EP 0 850 820. In the structure of EP 0 850 820, the spring is a tension spring which stretches out when the wheel turns but the mudguard is no longer allowed to turn. EP 1 043 217 also discloses a similar support for a mudguard in connection with a turning wheel. EP 1 043 217 discloses that the rotation axis of the support for a rotating element coincides with the steering axle of the hub of a wheel.

US 5 074 573 discloses a fastening support for a mudguard according to the preamble of claim 1.

### BRIEF DESCRIPTION OF THE INVENTION

An object of the invention is to provide a novel and improved fastening support for a mudguard.

This object is achieved by a fastening support according to claim 1.

### BRIEF DESCRIPTION OF THE DRAWINGS

The invention is described in closer detail in the accompanying drawings, in which

Figure 1 is a schematic cross-sectional view showing a fastening support for a mudguard arranged in connection with a wheel and as seen from the direction of travel of a vehicle,

Figures 2a, 2b and 2c are schematic top views showing a mudguard arranged in connection with a wheel turned in different positions,

Figure 3 is a schematic cross-sectional side view showing a fastening support for a wheel,

Figure 4 is a schematic side view showing the wheel of Figure 3, only in a direction 90° different from that in Figure 3,

Figure 5 is a schematic cross-sectional side view showing a bottom part of a fastening support for a second wheel, and

Figure 6 is a schematic bottom view showing the bottom part of the sleeve shown in Figure 5.

### DETAILED DESCRIPTION OF THE INVENTION

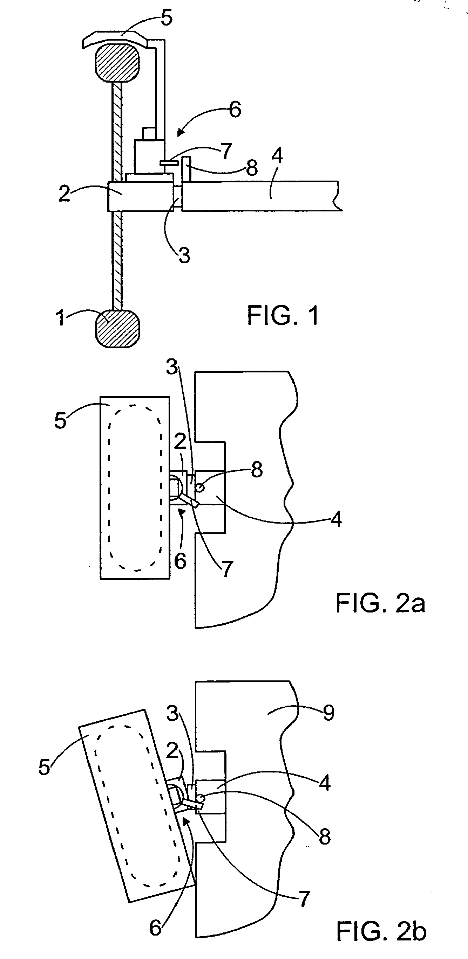

Figure 1 is a cross-sectional view showing a wheel 1 as seen from the direction of travel of a vehicle. The wheel 1 is arranged to rotate about a hub 2. The hub 2 is connected through a joint 3 to a non-turning axle 4 so that the hub 2 and thus the wheel 1 are allowed to turn with respect to the axle 4.

In connection with the wheel 1 resides a mudguard 5, which is connected to the hub 2 such that in a normal situation the mudguard 5 turns as the wheel 1 turns. Figure 2a shows a situation where the vehicle travels directly forward while Figure 2b shows a situation where the wheel 1 has been turned and the mudguard 5 has turned along with the wheel.

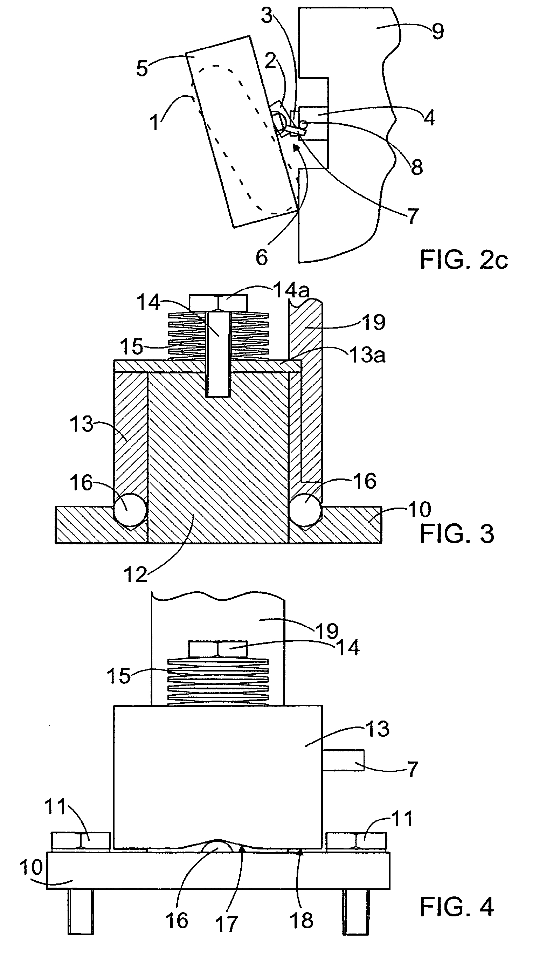

A fastening support for a mudguard 5 to enable the mudguard 5 to be connected to the hub 2 includes a flexible element 6 equipped with a spring element. The fastening support for the mudguard 5 is provided with a stop pin 7 or another suitable stop element. When the wheel 1 is turned beyond a given angle, the stop pin 7 collides with a fixed structure, such as a pin 8, provided in the vehicle. A collision occurs when the wheel is turned to the extent shown in Figure 2b. When the wheel 1 is further turned according to Figure 2c, the stop pin 7 prevents the mudguard 5 from turning. In such a case, the spring element in the flexible element 6 yields and the mudguard 5 does not collide with the body of the vehicle 9. The vehicle 9 may be e.g. an agricultural tractor or an excavator or another vehicle equipped with turning wheels. When the mudguard does not turn at a large turning angle along with the wheel, the vehicle is prevented from being damaged. A part of the vehicle, such as a side panel of a tractor, might be damaged upon being hit by a mudguard. Furthermore, damage to the mudguard 5 is naturally also avoided.

The stop element, which prevents the mudguard 5 from turning along with the wheel 1 at an angle larger than the given turning angle, may also be provided by means of a part of the vehicle 9 and the mudguard 5. In this case, the mudguard 5 is thus allowed to collide with the body of the vehicle 9, i.e. the body of the vehicle 9 serves as a stop element, and when the mudguard 5 collides with the body of the vehicle 9 and the wheel keeps turning, the spring element in the flexible element 6 yields. Such a stop element solution naturally requires that the mudguard 5 should be sufficiently strong and robust. Furthermore, the body of the vehicle 9 must be sufficiently strong at the point where the mudguard 5 hits the vehicle. For example, the side panel of a tractor may be provided e.g. with a piece of plastics for strength. The rigidity of the spring element is also adapted to yield early enough so as to prevent the mudguard 5 and the body of the vehicle 9 from being damaged.

Figure 3 shows a fastening support for a mudguard 5, the fastening support including a support plate 10. The support plate 10 is fixedly fastened to the hub of a wheel. The fastening may be implemented e.g. by bolts 11 shown in Figure 4. The support plate 10 is further, fixedly, e.g. by welding, provided with a cylindrical pin 12 fastened thereto. When the fastening support for a mudguard is manufactured e.g. to be used in connection with an agricultural tractor, the diameter of the pin 12 may be e.g. 50 mm when the fastening support is made of steel. Naturally, the dimensions of the fastening support vary according to the size of the mudguard and the vehicle as well as durability requirements and working conditions.

A sleeve 13 is provided outside the pin 12. The sleeve 13, at least the inner part thereof residing against the pin 12, is substantially circular and the inner diameter thereof and the outer diameter of the pin 12 are substantially equal in size. The outer surface of the sleeve 13 may also be circular. However, the shape of the outer surface may vary; if desired, the outer surface of the sleeve may be e.g. rectangular.

A fastening rod 19 is fixedly mounted to the sleeve 13. Equipment to enable the position of the mudguard to be adjusted in vertical and horizontal directions may be provided in connection with the fastening rod 19 of the mudguard but, for the sake of clarity, Figures 3 and 4 show no such equipment nor a mudguard 5.

The sleeve 13 is arranged to be kept in place by means of a tightening bolt 14 and a spring 15. The tightening bolt 14 is fastened to the pin 12. The spring 15 is arranged between the head 14a of the tightening bolt 14 and the top 13a of the sleeve 13. Preferably, the spring 15 is a cup spring wherein the spring consists of disk-like elements arranged against one another. The structure of the cup spring can be made rather low in height to enable the total structure of the fastening support also to remain reasonably low in height. Apart from a cup spring, the spring element may also be a coi spring or the spring element may be a plastic or rubber element made from an elastic material. A possible material for the spring element is e.g. polyurethane. The tightening bolt 14 enables the force with which the spring 15 presses the sleeve 13 downwards to be easily adjusted.

The support plate 10 is provided with grooves around the pin 12 arranged to receive balls 16. In the cases shown in Figures 3 and 4, the fastening support includes two balls. Several balls make the structure more balanced, so there could also be three or four or even more balls 16. The lower surface of the sleeve 13 is provided with sloped sections 17 at each ball 16. The balls 16 and the sloped sections 17 constitute wedge elements. Then, when the stop pin 7 prevents the sleeve 13 from turning when the wheel is being turned, the pin 12, however, continues to turn. The ball 16 then moves along with the support plate 10. The wedge element formed by the ball 16 and the sloped section 17 then lifts the sleeve 13 upwards.

The fastening support may also be formed such that the stop pin 7 restricts the turning of the sleeve 13 when the wheel is turned more than ± 20°. The length of the sloped section 17 is formed such that the ball 16, also at the maximum turning angle of the wheel, e.g. ± 55°, stays within the area of the sloped section 17. In such a case, the sloped section 17 is thus provided over a distance of at least ± 35°. Consequently, the wedge element formed by the ball 16 and the sloped section 17, together with the weight of the sleeve 13 and the related structures as well as the influence of the spring 15, returns the sleeve 13 to the position shown in Figures 3 and 4 with respect to the support plate 10.

Furthermore, the lower edge of the sleeve 13 is provided with grooves 18. If desired, the mudguard may be turned into a service position with respect to the support plate 10 such that a groove 18 in the sleeve 13 setties above a ball 16. In this connection, a service position refers to a position wherein the mudguard is turned away from the body of the vehicle such that there is enough room to service the vehicle e.g. from between the mudguard and the body of the vehicle. The groove 18 may be formed e.g. such that when the groove 18 is located above the ball 16, the mudguard is turned 45° from a normal position with respect to the support plate 10.

The sloped sections 17 are provided on both sides of the ball 16, in which case the fastening support is symmetrical such that it allows the sleeve 13 and the support plate 10 to move with respect to one another so that they may be returned to a normal position by means of the spring 15. The grooves 18 are also provided on both sides of the sloped section 17, enabling the mudguard to be turned to a service position in both directions.

Since the pin 12 and the sleeve 13 are supported against one another over a considerably long distance in the vertical direction, the structure of the fastening support is very firm. For example, even if the spring 15 were broken, the sleeve 13 and the pin 12 would still rather well remain located one upon the other, and the different parts of the fastening support would not become detached from one another. Furthermore, the tightening bolt 14 would not, even in such a case, be subjected by the sleeve 13 to a load twisting and trying to break the bolt 14 because the sleeve 13 is substantially supported against the cylindrical pin 12. Furthermore, since the cylindrical pin 12 and the sleeve 13 reside against one another over a considerably long di stance, the sleeve 13 is not easily lifted off from the cylindrical pin 12. The sleeve 13 and the pin 12 may reside against one another in the vertical direction e.g. over a distance of more than 50 mm.

In order to ensure the operation and endurance of the fastening support, it is advantageous to feed some lubricant between the moving parts of the structures. To feed the lubricant, the top 13a of the sleeve 13 may be equipped with a grease nipple. Naturally, the grease nip may also be arranged in another suitable place. Furthermore, the sleeve 13, the spring 15, the tightening bolt 14 and the balls 16 may be enclosed e.g. inside a plastic casing. In order to increase the endurance and operational reliability, such a casing may be filled with a lubricant, if desired. The casing may include e.g. two parts so that its upper part moves together with the sleeve 13 while the lower part is fixedly mounted to the support plate 10, allowing the upper and lower parts to move with respect to one another through sliding surfaces.

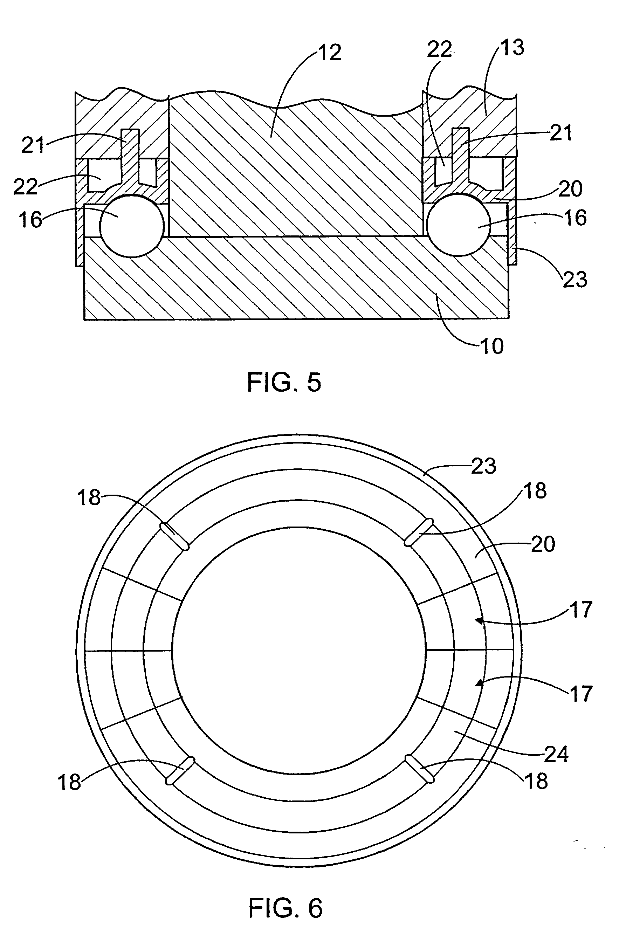

Figure 5 shows a solution wherein a lower part 20 of the sleeve 13 is made of plastics. Otherwise the sleeve 13 may be made e.g. of metal, and the lower surface of the metallic part may be straight and even. The lower part 20 of the sleeve, again, may be manufactured from plastics e.g. by means of injection moulding. In such a case, it is relatively simple to form e.g. wedge surfaces, compared e.g. to machining such wedge surfaces into a metallic sleeve. Suitable plastics raw materials for the material of the lower part 20 of the sleeve include e.g. glass fibre reinforced polyamide PA.

The lower part 20 of the sleeve is provided with pins 21 which extend to a metallic part of the sleeve 13. The pins 21 enable the lower part 20 of the sleeve to remain immobile with respect to the rest of the sleeve 13 also during turning. A plastic lower part 20 of the sleeve does not necessarily have to be particularly fastened to the rest of the sleeve 13 made of metal since due to the influence of the spring element and gravity, the metallic part of the sleeve 13 presses against the lower part 20 of the sleeve. If desired, the lower part 20 of the sleeve may be fastened to the rest of the sleeve 13 e.g. by gluing.

Furthermore, the lower part 20 of the sleeve is provided with grooves 22 to lighten the lower part 20 of the sleeve. Thus, the lower part 20 of the plastic sleeve does not have to be made of a solid plastics material but a suitable rib and/or cell structure enables savings to be made on the amount of the plastics material.

Furthermore, the lower part 20 of the sleeve is provided with a flange 23. The flange 23 at least partly overlaps with the support plate 10. This enables the structure formed by the balls 16 and the sloped sections 17 to be protected against fouling by means of the flange 23. This space, wherein the balls 16 are located, may also be filled with a lubricant, if desired.

Figure 6 is a bottom view showing the lower part 20 of a sleeve. The bottom part 20 of the sleeve is provided with a groove 24 to receive an upper part of the ball 16. Consequently, no point contact occurs between the ball 16 and the sleeve, but the contact area between the ball 16 and the sleeve is larger. This reduces the load exerted to the ball and the lower part of the sleeve, thus increasing the life of the structure. If desired, the groove 24 may also be machined into the lower surface of a metallic sleeve, but when the lower part 20 of the sleeve is formed of a plastics material by i n-jection moulding, it is quite easy to form the groove 24 in connection with the injection moulding.

The drawings and the related description are only intended to illustrate the idea of the invention. The details of the invention may vary within the scope of the claims. Consequently, in addition to utilizing the balls 16 and the sloped sections 17, the wedge element may be formed e.g. by providing both the support plate 10 and the lower surface of the sleeve 13 with sloping wedge surfaces. The different parts of the fastening support may be formed by machining and welding or they may be manufactured by moulding or by using another suitable method.

## Claims

1. A fastening support for a mudguard to enable the mudguard (5) to be fastened to a hub (2) of a turning wheel (1) such that as the wheel (1) turns at an angle smaller than a given turning angle, the mudguard (5) turns along with the wheel (1) accordingly, whereby by means of a stop element the mudguard (5) is prevented from turning along with the wheel (1) at an angle larger than the given turning angle, the fastening support including a flexible element (6) equipped with spring members and arranged to return the mudguard to turn along with the wheel (1) when the turning angle of the wheel (1) is returned to an angle smaller than the aforementioned given turning angle, the fastening support including a support plate (10) fixedly arranged in connection with the hub of the wheel (1) to move therewith, the support plate being provided with a fixedly arranged cylindrical pin (12), around which pin (12) resides a sleeve (13), in which sleeve (13) the mudguard (5) is fixedly arranged and in connection with which sleeve (13) a spring element is arranged such that between a lower part of the sleeve (13) and the support plate (10) therebelow resides a wedge element which, together with the weight of the mudguard (5) and the related support structures and the influence of the spring element, in a normal situation keeps the sleeve (13) and the pin (12) immobile with respect to one another, the stop element being arranged to stop the turning of the sleeve (13) at a large turning angle such that the pin (12) continues to turn along with the wheel (1) and the wedge element lifts the sleeve upwards, and when the wheel is returned towards a straight position, the spring element, together with the influence of gravity and the wedge element, is arranged to return the sleeve (13) and the pin (12) to a normal position with respect to one another, **characterized in that** the fastening support comprises at least two balls (16) around the cylindrical pin (12) arranged to move along with the support plate (10) and that the lower surface of the sleeve (13) is provided with sloped sections (17) at each ball (16), whereby the balls (16) and the sloped sections (17) provided on the lower surface of the sleeve (13) together form the wedge element.

2. A fastening support as claimed in claim 1, **characterized in that** the lower surface of the sleeve (13) is provided with grooves (18) such that the mudguard may be turned into a service position with respect to the support plate (10) such that the grooves (18) in the sleeve (13) settle above the balls (16).

3. A fastening support as claimed in claim 1 or 2, **characterized in that** the spring element is a cup spring (15).

4. A fastening support as claimed in any one of the preceding claims, **characterized in that** the wedge element is formed to operate in a substantially similar manner when the sleeve (13) and the pin (12) turn with respect to one another in both directions.

5. A fastening support as claimed in any one of the preceding claims, **characterized in that** the lower part (20) of the sleeve (13) is made of plastics.

6. A fastening support as claimed in any one of the preceding claims, **characterized in that** the lower surface of the sleeve (13) is provided with a groove (24) arranged to receive an upper part of the balls (16).

7. A fastening support as claimed in any one of the preceding claims, **characterized in that** in connection with the lower part of the sleeve (13) resides a flange (23) arranged to at least partly overlap with the support plate (10).

## Patentansprüche

1. Befestigungsvorrichtung für einen Kotflügel, um die Befestigung des Kotflügels (5) an einer Nabe (2) eines ausschwenkbaren Reifens (1) derart zu ermöglichen, dass, wenn der Reifen (1) in einem einen gegebenen Schwenkwinkel unterschreitenden Winkel geschwenkt wird, der Kotflügel (5) zusammen mit dem Reifen (10) entsprechend geschwenkt wird, wobei der Kotflügel (5) durch ein Halteelement daran verhindert wird, mit dem Reifen (1) in einem den gegebenen Schwenkwinkel überschreitenden Winkel geschwenkt zu werden, wobei die Befestigungsvorrichtung ein mit Federgliedern versehenes elastisches Element (6) aufweist, das angeordnet ist, den Kotflügel zurückzusetzen, zusammen mit dem Reifen (1) geschwenkt zu werden, wenn der Schwenkwinkel des Reifens (1) in einen den oben genannten gegebenen Schwenkwinkel unterschreitenden Winkel zurückgesetzt wird, wobei die Befestigungsvorrichtung eine Stützplatte (10) aufweist, die in Zusammenhang mit der Nabe des Reifens (1) fest angeordnet ist, um sich damit zu bewegen, wobei die Stützplatte mit einem fest angeordneten zylindrischen Zapfen (12) versehen ist, um welchen Zapfen (12) sich eine Hülse (13) befindet, wobei der Kotflügel (5) in der Hülse (13) fest angeordnet ist und ein Federelement in Zusammenhang mit der Hülse (13) derart angeordnet ist, dass sich zwischen einem unteren Teil der Hülse (13) und der darunter befindlichen Stützplatte (10) ein Keilelement befindet, das, zusammen mit dem Gewicht des Kotflügels (5) und der zugehörigen Stützstrukturen und der Einwirkung des Federelements, in einer normalen Situation die Hülse (13) und den Zapfen (12) in Bezug aufeinander unbeweglich hält, wobei das Halteelement angeordnet ist, das Schwenken der Hülse (13) in einem großen Schwenkwinkel zu stoppen, so dass der Zapfen (12) fortsetzt, zusammen mit dem Reifen (1) geschwenkt zu werden, und das Keilelement die Hülse nach oben hebt, und wenn der Reifen in eine gerade Stellung zurückgesetzt wird, ist das Federelement angeordnet, zusammen mit der Einwirkung von Schwerkraft und dem Keilelement die Hülse (13) und den Zapfen (12) in Bezug aufeinander in eine Normalstellung zurückzusetzen, **dadurch gekennzeichnet, dass** die Befestigungsvorrichtung zumindest zwei Bälle (16) um den zylindrischen Zapfen (12) aufweist, die angeordnet sind, sich mit der Stützplatte (10) zu bewegen, und dass die untere Oberfläche der Hülse (13) mit abgeschrägten Abschnitten (17) an jedem Ball (16) versehen ist, wobei die Bälle (16) und die abgeschrägten Abschnitte (17) auf der unteren Oberfläche der Hülse (13) zusammen ein Keilelement ausbilden.

2. Befestigungsvorrichtung nach Anspruch 1, **dadurch gekennzeichnet, dass** die untere Oberfläche der Hülse (13) mit Rillen (18) versehen ist, so dass der Kotflügel in eine Betriebsstellung in Bezug auf die Stützplatte (10) derart geschwenkt werden kann, dass sich die Rillen (18) in der Hülse (13) über die Bälle (16) setzen.

3. Befestigungsvorrichtung nach Anspruch 1 oder 2, **dadurch gekennzeichnet, dass** das Federelement eine Tellerfeder (15) ist.

4. Befestigungsvorrichtung nach einem der vorhergehenden Ansprüche, **dadurch gekennzeichnet, dass** das Keilelement ausgebildet ist, auf wesentlich ähnliche Weise zu arbeiten, wenn die Hülse (13) und der Zapfen (12) in Bezug aufeinander in beiden Richtungen geschwenkt werden.

5. Befestigungsvorrichtung nach einem der vorhergehenden Ansprüche, **dadurch gekennzeichnet, dass** der untere Teil (20) der Hülse (13) aus Kunststoff besteht.

6. Befestigungsvorrichtung nach einem der vorhergehenden Ansprüche, **dadurch gekennzeichnet, dass** die untere Oberfläche der Hülse (13) mit einer Rille (24) versehen ist, die angeordnet ist, einen oberen Teil der Bälle (16) aufzunehmen.

7. Befestigungsvorrichtung nach einem der vorhergehenden Ansprüche, **dadurch gekennzeichnet, dass** sich in Zusammenhang mit dem unteren Teil der Hülse (13) ein Flansch (23) befindet, der angeordnet ist, zumindest teilweise mit der Stützplatte (10) zu überlappen.

## Revendications

1. Support de fixation pour un garde-boue destiné à permettre au garde-boue (5) d'être fixé sur un moyeu (2) d'une roue directrice (1) de telle sorte que, lorsque la roue (1) est braquée avec un angle plus petit qu'un angle de braquage donné, le garde-boue (5) tourne avec la roue (1) de manière correspondante, et au moyen d'un élément de butée, le garde-boue (5) est empêché d'être braqué avec la roue (1) avec un angle plus grand que l'angle de braquage donné, le support de fixation comprenant un élément flexible (6) équipé d'éléments de ressort et prévu pour ramener le garde-boue à être braqué avec la roue (1) quand l'angle de braquage de la roue (1) est ramené à un angle plus petit que l'angle de braquage donné mentionné ci-dessus, le support de fixation comprenant une plaque de support (10) disposée de façon fixe en liaison avec le moyeu de la roue (1) afin de se déplacer avec celui-ci, la plaque de support étant pourvue d'un axe cylindrique disposé de façon fixe (12), un manchon (13) se trouvant autour de cet axe (12), le garde-boue (5) étant disposé de façon fixe dans ce manchon (13) et, en liaison avec ce manchon (13), un élément de ressort étant disposé de telle sorte que, entre une partie inférieure du manchon (13) et la plaque de support (10) en dessous se trouve un élément de coin qui, avec le poids du garde-boue (5) et les structures de support associées et l'influence de l'élément de ressort, dans une situation normale, maintient le manchon (13) et l'axe (12) immobiles l'un par rapport à l'autre, l'élément de butée étant prévu pour arrêter la rotation du manchon (13) à un angle de braquage important de telle sorte que l'axe (12) continue à tourner avec la roue (1) et l'élément de coin soulève le manchon, et quand la roue est ramenée vers une position droite, l'élément de ressort, avec l'influence de la pesanteur et de l'élément de coin, est prévu pour ramener le manchon (13) et l'axe (12) dans une position normale l'un par rapport à l'autre, **caractérisé en ce que** le support de fixation comporte au moins deux billes (16) autour l'axe cylindrique (12) prévues pour se déplacer avec la plaque de support (10) et **en ce que** la surface inférieure du manchon (13) est pourvue de sections inclinées (17) au niveau de chaque brille (16), de sorte que les billes (16) et les sections inclinées (17) prévues la surface inférieure du manchon (13) forment ensemble l'élément de coin.

2. Support de fixation selon la revendication 1, **caractérisé en ce que** la surface inférieure du manchon (13) est pourvue de rainures (18) de telle sorte que le garde-boue peut être tourné dans une position d'entretien par rapport à la plaque de support (10) de telle sorte que les rainures (18) dans le manchon (13) reposent au-dessus des billes (16).

3. Support de fixation selon la revendication 1 ou 2, **caractérisé en ce que** l'élément de ressort est une rondelle élastique (15).

4. Support de fixation selon l'une quelconque des revendications précédentes, **caractérisé en ce que** l'élément de coin est formé afin de fonctionner d'une marnière essentiellement similaire quand le manchon (13) et l'axe (12) tournant l'un par rapport à l'autre dans les deux directions.

5. Support de fixation selon l'une quelconque des revendications précédentes, **caractérisé en ce que** la partie inférieure (20) du manchon (13) est fabriquée en matière plastique.

6. Support de fixation selon l'une quelconque des revendications précédentes, **caractérisé en ce que** la surface inférieure du manchon (13) est pourvue d'une rainure (24) prévue pour recevoir une partie supérieure des billes (16).

7. Support de fixation selon l'une quelconque des revendications précédentes, **caractérisé en ce que,** en liaison avec la partie inférieure du manchon (13), se trouve un rebord (23) prévu pour recouvrir au moins en partie la plaque de support (10).
